# FASCICULE DE BREVET EUROPEEN

(11) **EP 2 999 949 B1**
(45) Date de publication et mention de la délivrance du brevet: **11.01.2017**
(21) Numéro de dépôt: 14715567.5
(22) Date de dépôt: 01.04.2014
(51) Int. Cl.: G01K 1/14, F24J 2/40, F24J 2/46

(54) **CAPTEUR DE FLUX THERMIQUE**
WÄRMEFLUSSSENSOR
HEAT FLOW SENSOR

(30) Priorité: 23.05.2013 BE 201300363
(43) Date de publication de la demande: 30.03.2016
(73) Titulaire: Cockerill Maintenance & Ingénierie S.A., 4100 Seraing (BE)
(72) Inventeur: CARA, Fabien, F-25300 Doubs (FR); RUDAZ, Daniel, CH-1814 La Tour-de-Peilz (CH); DETHIER, Alfred, B-4140 Sprimont (BE)
(74) Mandataire: Pronovem
(86) Numéro de dépôt international: PCT/EP2014/056525
(87) Numéro de publication internationale: WO 2014/187598

(56) Documents cités:
- WO-A1-2010/094618
- US-A- 3 724 267
- US-B1- 6 485 174
- John Fineron: "Metal Joining, Février 2011", , 1 février 2011 (2011-02-01), pages 1-14, XP055100567, Zürich Extrait de l'Internet: URL:http://www.johnson-matthey.ch/french/p dfs/1102_JMB Overview_Metal Joining_F.PDF [extrait le 2014-02-05]

## Description

### Objet de l'invention

La présente invention se rapporte à un capteur de flux thermique destiné à être installé dans une portion de surface d'un échangeur de chaleur, le flux thermique pouvant être conductif, convectif ou radiatif. Le capteur de flux thermique génère un signal électrique proportionnel au gradient de température généré par le flux thermique dans le capteur. Le flux thermique est alors obtenu en divisant le signal obtenu par une constante spécifique à chaque capteur (calibration).

### Etat de la technique

Dans les applications de chaudière solaire à concentration, il est connu que le rayonnement solaire est concentré par des miroirs orientés selon la position du soleil et suivant le déplacement de celui-ci. La concentration solaire peut ainsi atteindre des valeurs très élevées, jusqu'à 1000 fois, résultant en des flux thermiques très élevés sur les panneaux récepteurs de la chaudière solaire. Ces panneaux d'échangeur sont souvent constitués d'un ensemble de tubes empilés longitudinalement de manière à créer une paroi « étanche » au flux lumineux incident.

Par exemple, le document WO 2010/094618 montre un échangeur dit « drapeau », où des tubes adjacents en forme d'épingle à cheveux sont disposés côte à côte et fixés, en porte-à-faux, du même côté aux collecteurs d'entrée et de sortie.

La tenue mécanique des éléments constitutifs de ces panneaux récepteurs nécessite de limiter la valeur des flux précités, d'une manière qui soit compatible avec les matériaux utilisés dans les panneaux et avec les propriétés d'échange thermique de ceux-ci.

Il est donc utile de pouvoir mesurer les flux thermiques pendant le fonctionnement de la chaudière solaire. Des capteurs de flux thermique sont ainsi utilisés à cet effet.

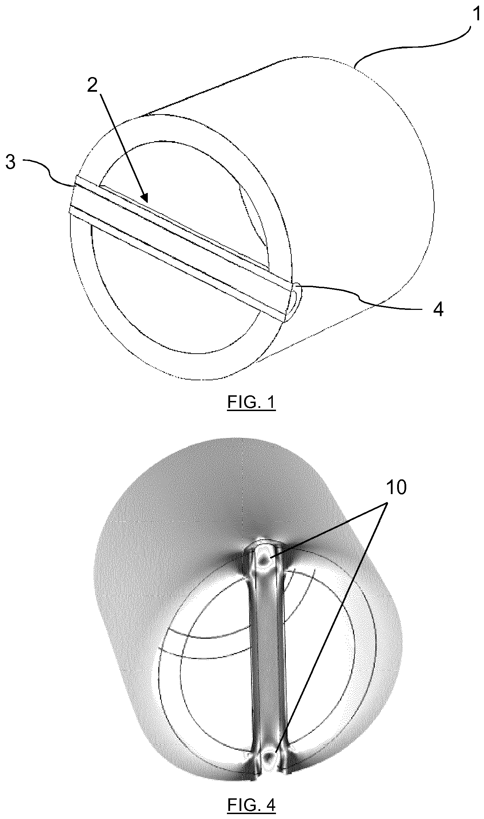

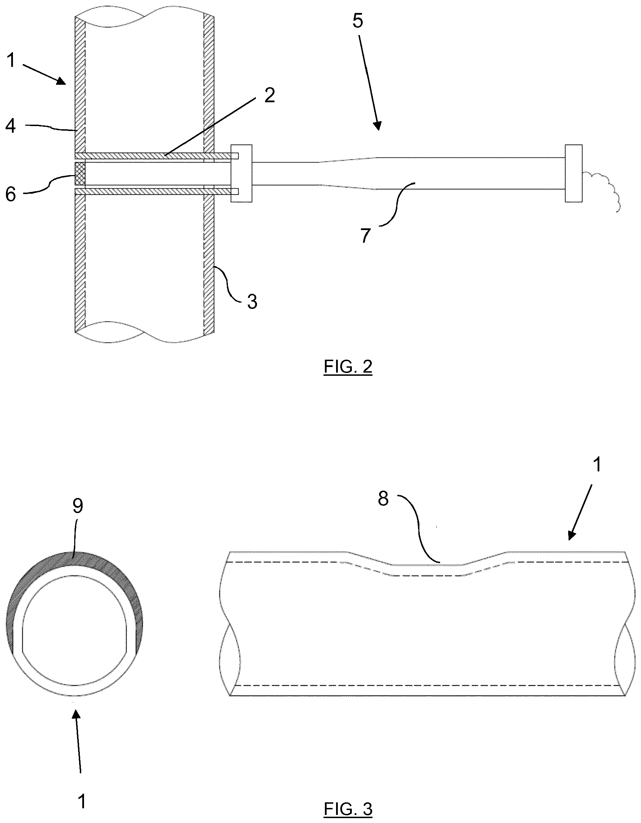

A l'heure actuelle, deux technologies sont utilisées pour ces capteurs de flux :
- la première technologie est celle dite du tube traversant (comme représenté à la figure 1). Les panneaux récepteurs étant constitués de tubes 1 installés côte à côte et formant un mur étanche aux rayons solaires, un tube supplémentaire 2 de petit diamètre traverse le tube de panneau 1 selon sa section et est soudé à celui-ci afin de conserver un ensemble étanche et résistant à la pression de vapeur de la chaudière. La face avant 4 du ou des tubes 1 est celle exposée au flux thermique tandis que la face arrière 3 est celle opposée à la face avant 4. Le capteur de flux est inséré par la face arrière 3 dans le tube traversant 2, jusqu'à atteindre la face 4 exposée aux rayonnements. Comme représenté sur la figure 2, le flux thermique est mesuré par le différentiel de température entre le sommet 6 du capteur 5 et le corps 7 de celui-ci, ledit corps étant refroidi par le fluide circulant dans le tube d'échangeur 1, via le contact avec le tube traversant 2 ;
- la seconde technologie est une technologie utilisant des thermocouples noyés dans un rechargement, comme représenté sur la figure 3. Deux thermocouples (non représentés) sont installés sur la face du tube 1 exposée au rayonnement, dans une déformation locale 8 du tube. Cette déformation est effectuée à froid sans amincissement. Les thermocouples ainsi que leurs câbles de connexion sont ensuite recouverts par une soudure de remplissage 9, reconstituant ainsi la surface initiale du tube 1.

Dans le premier cas, le tube traversant 2 induit des contraintes locales 10 élevées, comme représenté sur la figure 4, susceptibles d'amener une dégradation du tube et un risque de fuite à terme.

Dans le deuxième cas, un tronçon de tube doit être travaillé en atelier et nécessite deux soudures tube-tube sur le panneau à chaque capteur.

Le document US 3,724,267 divulgue un dispositif de détection de flux thermique comprenant un capteur situé entre deux tubes reliés longitudinalement par une ailette. Le capteur est pourvu de deux thermocouples. La base du capteur comprend des parties qui s'étendent dans des portions latérales des tubes. La base du capteur est en contact thermique avec l'ailette.

Le document US 6,485,174 divulgue un dispositif de détection de flux thermique comprenant un capteur situé entre deux tubes reliés longitudinalement par une membrane. Le capteur est pourvu de deux thermocouples. Le capteur est inséré par l'arrière dans la membrane. La mesure du flux thermique est déterminée par les deux thermocouples séparés par une certaine distance dans le capteur. L'information donnée par les mesures des thermocouples permet de calculer le flux thermique.

Le document US 2012/0067542 divulgue un dispositif de mesure pour un échangeur de chaleur comprenant une série de tubes reliés par des membranes qui présente un côté de chauffage et un côté d'isolation. Un capteur de flux de chaleur comprenant deux capteurs de température est disposé dans un renfoncement du tube sur le côté de chauffage. Les deux capteurs mesurent des températures T1 et T2 dont la différence peut être détectée. Un capteur de température pour mesurer une température T3 est disposé sur le côté d'isolation et à une certaine distance du capteur de flux de chaleur.

Le document JP 2006-329640 divulgue un débitmètre de type thermique équipé d'un support de capteur comportant les capteurs de température placés chacun dans une gaine cylindrique supportée par une section intermédiaire suivie par une section de capteur sensible à la température. Ces deux dernières sections sont placées dans le débit de fluide circulant dans des tubes.

Le document WO 2010/100335 divulgue un agencement permettant de monter un capteur dans une paroi d'un échangeur thermique, qui est formée de tubes en acier soudés les uns aux autres, des plaques d'ailettes entre les tubes formant une paroi membranaire. La chambre du capteur et le canal conducteur nécessaire aux fils du capteur sont situés sur le côté de la chaudière dans un épaississement de la paroi du tube d'acier.

### Buts de l'invention

La présente invention vise à fournir un capteur de flux thermique qui permette de s'affranchir des inconvénients de l'état de la technique, à savoir notamment ceux relatifs à la technologie du tube traversant ou à celle des thermocouples noyés dans une déformation locale du tube échangeur, avec rechargement de soudure.

En particulier, l'invention a pour but de fournir un capteur de flux thermique non invasif, ne nécessitant pas d'usinage des tubes, ni de déformation des tubes avec réalisation de soudures sous pression.

L'invention a encore pour but de fournir un support pour capteur de flux thermique bon marché et permettant un remplacement facile du capteur.

### Principaux éléments caractéristiques de l'invention

Un premier objet de la présente invention se rapporte à un échangeur de chaleur comportant une pluralité de tubes d'échange montés jointifs longitudinalement de manière à créer une portion de surface avant faisant obstacle à un flux thermique incident et au moins un capteur de flux thermique disposé dans un support situé entre deux tubes d'échange adjacents, dans lequel :
- les deux tubes adjacents présentent chacun, au niveau de leur portion jointive, une légère déformation locale, de manière à permettre le positionnement du support de capteur de flux thermique par insertion entre les deux tubes ;
- le capteur de flux thermique est monté amovible dans ledit support, celui-ci ayant la forme d'une enveloppe creuse réalisée de manière à pouvoir s'insérer entre les deux tubes adjacents, à hauteur desdites déformations locales ;
et caractérisé en ce que le support du capteur de flux thermique est brasé à au moins un des deux tubes et est aplati du côté devant être disposé à l'avant, en référence au flux thermique incident, de manière à pouvoir être inséré entre les deux tubes adjacents à hauteur desdites déformations locales.

Selon des formes d'exécution préférées de l'invention, l'échangeur de chaleur comporte en outre une des caractéristiques suivantes ou une combinaison appropriée des caractéristiques suivantes :
- le capteur de flux thermique comprend une partie conique démontable qui s'insère par l'arrière, en référence au flux thermique incident, et se visse dans ledit support vers l'avant, assurant ainsi le contact thermique entre le capteur et le support ;
- le capteur de flux thermique comprend une pointe avant et un corps où seront respectivement effectuées les mesures de température permettant d'obtenir une différence de température pour la mesure du flux thermique ;
- la légère déformation locale est une déformation réalisée à la presse.

Un deuxième objet de la présente invention se rapporte à une centrale solaire à concentration thermodynamique comportant une chaudière munie d'un échangeur de chaleur comme décrit ci-dessus.

### Brève description des figures

La figure 1 est une vue en perspective d'un tube de panneau échangeur équipé d'un tube traversant destiné à l'installation d'un capteur de flux thermique, selon l'état de la technique.

La figure 2 est une vue en coupe d'un capteur de flux thermique installé selon la technologie du tube traversant de la figure 1.

La figure 3 représente schématiquement la technologie d'installation de thermocouples dans une déformation locale d'un tube échangeur avec recharge par soudure, selon l'état de la technique.

La figure 4 montre les contraintes locales résultant de l'utilisation de la technologie à tube traversant de la figure 1.

Les figures 5A et 5B représentent respectivement une vue en coupe transverse et une vue en perspective d'un capteur de flux thermique en position dans son support sur les tubes échangeurs selon une forme d'exécution particulière de la présente invention.

### Description d'une forme d'exécution préférée de l'invention

L'idée à la base de la présente invention consiste à installer le capteur de flux thermique entre deux tubes du panneau d'échange, sans rupture d'étanchéité, sans réalisation de soudures sous pression et avec le moins possible d'usinage ou de déformation des tubes. L'invention vise en particulier une application d'échangeur de chaleur où les tubes d'échange sont jointifs, éventuellement avec un léger jeu, sans ailette de jonction entre les tubes.

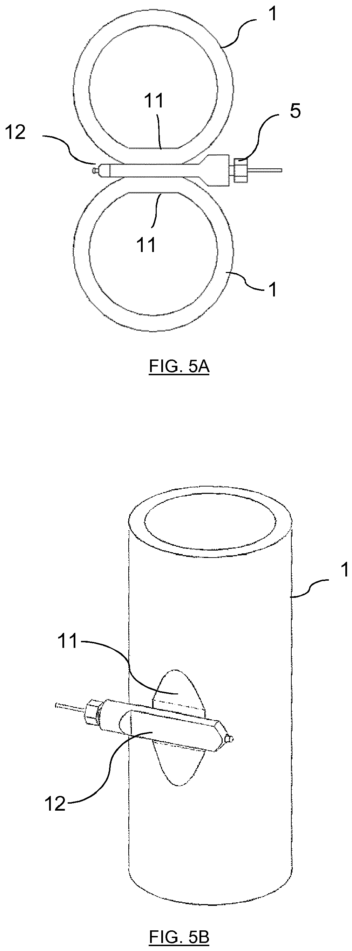

Pour ce faire, comme représenté sur les figures 5A et 5B pour un exemple de mode d'exécution, une très légère déformation locale 11 des deux tubes 1 sera réalisée à la presse. Un support de capteur 12, essentiellement sous forme d'un tube aplati d'un côté, sera alors installé entre les deux tubes d'échange 1 et brasé à l'un des tubes d'échange 1 afin d'assurer le maintien du support mais aussi son bon refroidissement par le fluide circulant dans le tube d'échange. Le capteur 5 sera inséré dans le support 12 par l'arrière, relativement au flux solaire incident, et vissé au support 12. Le capteur 5 comprend avantageusement une partie conique (non représentée) s'adaptant à l'intérieur du support 12, matérialisant le contact entre le capteur 5 et le support 12 refroidi par le tube 1 sur lequel ce dernier est brasé.

Comme dans les technologies de l'état de la technique, le flux thermique sera l'image de la différence de température entre la pointe du capteur et le corps de celui-ci, qui est refroidi par le fluide circulant dans le tube.

La solution apportée par la présente invention est non intrusive, n'induit aucun risque pour le tube et présente l'avantage de ne pas demander de soudure sous pression complémentaire. De plus, comme dans la solution du tube traversant, le capteur est démontable par l'arrière et peut facilement être remplacé.

### Symboles de référence

- 1.: tube d'échange
- 2.: tube traversant, support de capteur de flux thermique
- 3.: partie arrière du tube d'échange
- 4.: partie avant du tube d'échange
- 5.: capteur de flux thermique
- 6.: pointe du capteur
- 7.: corps du capteur
- 8.: déformation locale de tube
- 9.: soudure de rechargement contenant les thermocouples
- 10.: contrainte locale
- 11.: déformation/plat dans tube d'échange
- 12.: support de capteur

## Revendications

1. Echangeur de chaleur comportant une pluralité de tubes d'échange (1) montés jointifs longitudinalement de manière à créer une portion de surface avant (4) faisant obstacle à un flux thermique incident et au moins un capteur de flux thermique (5) disposé dans un support (12) situé entre deux tubes d'échange (1) adjacents, dans lequel :
- les deux tubes adjacents (1) présentent chacun, au niveau de leur portion jointive, une légère déformation locale (11), de manière à permettre le positionnement du support (12) de capteur de flux thermique (5) par insertion entre les deux tubes ;
- le capteur de flux thermique (5) est monté amovible dans ledit support (12), celui-ci ayant la forme d'une enveloppe creuse réalisée de manière à pouvoir s'insérer entre les deux tubes adjacents (1), à hauteur desdites déformations locales (11) ;
et **caractérisé en ce que** le support (12) du capteur de flux thermique (5) est brasé à au moins un des deux tubes (1) et est aplati du côté devant être disposé à l'avant (4), en référence au flux thermique incident, de manière à pouvoir être inséré entre les deux tubes adjacents (1) à hauteur desdites déformations locales (11).

2. Echangeur de chaleur selon la revendication 1, **caractérisé en ce que** le capteur de flux thermique (5) comprend une partie conique démontable qui s'insère par l'arrière (3), en référence au flux thermique incident, et se visse dans ledit support (12) vers l'avant (4), assurant ainsi le contact thermique entre le capteur (5) et le support (12).

3. Echangeur de chaleur selon la revendication 2, **caractérisé en ce que** le capteur de flux thermique (5) comprend une pointe avant (6) et un corps (7) où seront respectivement effectuées les mesures de température permettant d'obtenir une différence de température pour la mesure du flux thermique.

4. Echangeur de chaleur selon la revendication 1, **caractérisé en ce que** la légère déformation locale (11) est une déformation réalisée à la presse.

5. Centrale solaire à concentration thermodynamique comportant une chaudière munie d'un échangeur de chaleur selon l'une quelconque des revendications 1 à 4.

## Patentansprüche

1. Wärmetauscher, aufweisend eine Vielzahl von Tauscherrohren (1), die längs nebeneinanderliegend montiert sind, so dass sie einen vorderen Flächenabschnitt (4) bilden, der für einen einfallenden Wärmestrom ein Hindernis bildet, und mindestens einen Wärmeflusssensor (5), der in einem Halter (12) angeordnet ist, der sich zwischen zwei benachbarten Tauscherrohren (1) befindet, wobei:
- die zwei benachbarten Rohre (1) jeweils im Bereich ihres nebeneinanderliegenden Abschnitts eine leichte lokale Verformung (11) aufweisen, um die Positionierung des Halters (12) des Wärmeflusssensors (5) durch Einsetzen zwischen den zwei Rohren zu erlauben,
- der Wärmeflusssensor (5) lösbar in dem Halter (12) montiert ist, wobei dieser die Form einer hohlen Hülle hat, die derart ausgebildet ist, dass sie zwischen den zwei benachbarten Rohren (1) in Höhe der lokalen Verformungen (11) einsetzbar ist,
und **dadurch gekennzeichnet, dass** der Halter (12) des Wärmeflusssensors (5) mit mindestens einem der zwei Rohre (1) verlötet ist und auf der Seite, die in Bezug auf den einfallenden Wärmestrom nach vorn (4) anzuordnen ist, abgeflacht ist, um zwischen den zwei benachbarten Rohren (1) in Höhe der lokalen Verformungen (11) einsetzbar zu sein.

2. Wärmetauscher nach Anspruch 1, **dadurch gekennzeichnet, dass** der Wärmeflusssensor (5) einen demontierbaren konischen Teil umfasst, der in Bezug auf den einfallenden Wärmestrom von hinten (3) eingesetzt wird und in dem Halter (12) nach vorn (4) verschraubt wird, wodurch der thermische Kontakt zwischen dem Sensor (5) und dem Halter (12) gesichert ist.

3. Wärmetauscher nach Anspruch 2, **dadurch gekennzeichnet, dass** der Wärmeflusssensor (5) eine vordere Spitze (6) und einen Körper (7) umfasst, wo jeweils die Temperaturmessungen durchgeführt werden, die erlauben, eine Temperaturdifferenz für die Messung des Wärmestroms zu erhalten.

4. Wärmetauscher nach Anspruch 1, **dadurch gekennzeichnet, dass** die leichte lokale Verformung (11) eine Verformung ist, die mit der Presse durchgeführt wird.

5. Solarzentrale mit thermodynamischer Konzentration, umfassend einen Heizkessel, der mit einem Wärmetauscher nach einem der Ansprüche 1 bis 4 ausgestattet ist.

## Claims

1. A heat exchanger comprising a plurality of exchange tubes (1) mounted joined longitudinally in such a way as to create a front surface portion (4) creating an obstacle to an incident heat flow and at least one heat flow sensor (5) disposed in a support (12) located between two adjacent exchange tubes (1), wherein:
- the two adjacent tubes (1) each have, at their joined portion, a slight local deformation (11), in such a way as to allow the positioning of the heat flow sensor (5) support (12) by insertion between the two tubes;
- the heat flow sensor (5) is mounted movably in said support (12), the latter having the shape of a hollow enclosure made in such a way as to be able to be inserted between the two adjacent tubes (1), at the location of said local deformations (11);
and **characterized in that** the support (12) of the heat flow sensor (5) is brazed to at least one of the two tubes (1) and is flattened on the side that is to be disposed at the front (4), with reference to the incident heat flow, in such a way as to be able to be inserted between the two adjacent tubes (1) at the location of said local deformations (11).

2. The heat exchanger according to claim 1, **characterized in that** the heat flow sensor (5) comprises a removable conical part that is inserted from the rear (3), with reference to the incident heat flow, and is screwed into said support (12) toward the front (4), thus ensuring thermal contact between the sensor (5) and the support (12).

3. The heat exchanger according to claim 2, **characterized in that** the heat flow sensor (5) comprises a front tip (6) and a body (7) where the temperature measurements will be respectively done making it possible to obtain a temperature difference for the measurement of the heat flow.

4. The heat exchanger according to claim 1, **characterized in that** the slight local deformation (11) is a deformation done by press.

5. A solar power unit with thermodynamic concentration comprising a boiler provided with a heat exchanger according to any one of claims 1 to 4.
